# EUROPÄISCHE PATENTSCHRIFT

(11) **EP 2 458 347 B1**
(45) Veröffentlichungstag und Bekanntmachung des Hinweises auf die Patenterteilung: **30.12.2020**
(21) Anmeldenummer: 10015084.6
(22) Anmeldetag: 29.11.2010
(51) Int. Cl.: G01F 15/00, G01F 15/14, G01F 23/00

(54) **Gehäuse für ein Füllstandmessgerät**
Casing for a fill level measuring device
Boîtier pour un appareil de mesure du niveau de remplissage

(43) Veröffentlichungstag der Anmeldung: 30.05.2012
(73) Patentinhaber: VEGA Grieshaber KG, 77709 Wolfach (DE)
(72) Erfinder: Kopp, Thomas, 77709 Wolfach (DE)
(74) Vertreter: Patentanwälte Bauer Vorberg Kayser

(56) Entgegenhaltungen:
- EP-A1- 1 413 526
- DE-U1- 20 006 078
- DE-U1- 29 902 509
- FR-A1- 2 886 009
- US-A1- 2001 030 189
- US-A1- 2003 150 280
- US-A1- 2007 199 365

## Beschreibung

Die Erfindung betrifft ein Gehäuse für ein Füllstandmessgerät gemäß dem Oberbegriff des Patentanspruchs 1.

US 2007/199365 A1 beschreibt ein Gehäuse für ein Füllstandmessgerät mit einem Deckel, wobei das Gehäuse und der Deckel miteinander verschraubbar sind. Eine elektrische Einheit bildet einen Anschlag für den Deckel in Einschraubrichtung, und die Gewinde wirken als eine Aufdrehsicherung zwischen dem Gehäuse und dem Deckel.

Andere Gehäuse weisen einen Deckel auf, wobei das Gehäuse und der Deckel miteinander verschraubbar sind und in Einschraubrichtung ein Anschlag für den Deckel vorgesehen ist. Um eine Aufdrehsicherung zwischen dem Gehäuse und dem Deckel zu realisieren und damit zu verhindern, dass sich die Schraubverbindung bei Vibrationen unbeabsichtigt von selber löst, werden der Deckel und das Gehäuse häufig miteinander verklebt. Das Öffnen einer auf diese Weise gesicherten Schraubverbindung ist allerdings nicht ohne eine Beschädigung des Deckels oder des Gehäuses möglich.

Als weitere Möglichkeit für eine Aufdrehsicherung sind aus dem Stand der Technik für Schraubverbindungen kraftschlüssige Aufdrehsicherungen bekannt, bspw. Federringe oder Federscheiben, die zwischen dem schraubbaren Abschnitt der Schraubverbindung, bspw. einer Mutter bzw. hier dem Deckel, und dem feststehenden Abschnitt der Schraubverbindung, hier dem Gehäuse bzw. einem Anschlag im Gehäuse angeordnet sind. Derartige kraftschlüssige Aufdrehsicherungen sind jedoch im Zusammenhang mit Gehäusen der vorliegenden Art unpraktikabel.

Die FR 2 886 009 A1 oder US 2003/150280 A1 offenbaren Gehäuse für Messgeräte jeweils mit einem Deckel, wobei ein Anschlag für den Deckel und eine Aufdrehsicherung zwischen dem Gehäuse und dem Deckel vorgesehen sind, wobei die Aufdrehsicherung als wenigstens eine Rastverbindung ausgebildet ist.

Die DE 200 06 078 U1 offenbart eine Messkapsel für Wasserzähler mit einem Schraubkopf, der an der der Zählwerkshaube zugewandten Seite einen Vorsprung zur Verdrehsicherung aufweist. Der Montageanschlag der Zählwerkshaube liegt an dem Vorsprung des Schaubkopfes an, so dass durch Drehen der Zählwerkshaube der Schraubkopf mitgedreht und eingeschraubt wird. Bei Erreichen eines definierten Widerstandsmoments gegen Abscheren schert der Montageanschlag ab und die Zählwerkshaube ist in dem Schraubkopf drehbar. Ein zweiter Anschlag der Zählwerkshaube ist ein als Verdrehsicherungsvorsprung ausgebildeter Manipulationssicherungsvorsprung, der einen kleineren Durchmesser als der Montageanschlag und somit ein geringeres Abschermoment aufweist. Der Manipulationssicherungsvorsprung stellt sicher, dass eine Manipulation durch Zurückdrehen der Zählwerkshaube nicht möglich ist, da dann der Manipulationssicherungsvorsprung abgeschert wird.

Es ist die Aufgabe der vorliegenden Erfindung ein Gehäuse mit einem Deckel zur Verfügung zu stellen, das eine Aufdrehsicherung aufweist, die die vorgenannten Nachteile nicht aufweist.

Diese Aufgabe wird gelöst durch ein Gehäuse mit den Merkmalen des Patentanspruchs 1.

Ein erfindungsgemäßes Gehäuse für ein Füllstandsmessgerät weist einen Deckel auf, wobei das Gehäuse und der Deckel miteinander verschraubbar sind, in Einschraubrichtung ein Anschlag für den Deckel vorgesehen ist, und eine Aufdrehsicherung zwischen dem Gehäuse und dem Deckel vorgesehen ist, wobei die Aufdrehsicherung als wenigstens eine Rastverbindung ausgebildet ist, wobei der Deckel nach einem Einrasten der Rastverbindung ohne Beschädigung der Rastverbindung wieder aufschraubbar ist, oder nur unter wenigstens teilweiser Zerstörung der Rastverbindung wieder aufschraubbar ist. Auf diese Weise wird für den Deckel eine einfach ausgebildete Aufdrehsicherung erreicht, die durch das Einrasten verhindert, dass die Schraubverbindung zwischen Gehäuse und Deckel bei Vibrationen unbeabsichtigt gelockert bzw. gelöst wird. Die erfindungsgemäße Aufdrehsicherung kann so ausgestaltet sein, dass beim Verschrauben des Deckels mit dem Gehäuse die Aufdrehsicherung automatisch bei Erreichen des Anschlags einrastet und dann nur durch Überwinden einer erhöhten Kraft in Aufdrehrichtung wieder überwunden werden kann.

Eine Rastverbindung zur Ausbildung einer erfindungsgemäßen Aufdrehsicherung ist besonders einfach herstellbar, wenn sie aus wenigstens einem Rastvorsprung und wenigstens einer Rastausnehmung, die korrespondierend zu dem Rastvorsprung ausgebildet ist, aufgebaut wird. Beim Zudrehen kann auf diese Weise bei Erreichen des Anschlags der Rastvorsprung in die Rastausnehmung einrasten und so ein ungewolltes Aufdrehen des Deckels verhindern.

In einer besonders einfachen Ausgestaltung ist wenigstens ein Teil der Rastverbindung an einer Stirnfläche des Deckels angeordnet. Auf diese Weise wird erreicht, dass ein Innen- oder Außengewinde des Deckels unverändert hergestellt werden kann und die Rastverbindung bei Anlaufen der Stirnfläche an dem Anschlag aktiviert wird.

In einer möglichen Variante ist in dem Anschlag, der an dem Gehäuse angeordnet ist, die wenigstens eine Rastausnehmung vorgesehen und der wenigstens eine Rastvorsprung sitzt an der Stirnfläche es Deckels. Rastausnehmung und Rastvorsprung sind dabei derart angeordnet, dass sie korrespondierend zueinander angeordnet sind und bevorzugt mit gleichem Abstand von der Drehachse des Schraubvorgangs positioniert sind.

Eine besonders einfache Ausgestaltung wird erreicht, wenn der wenigstens eine Rastvorsprung einstückig an den Deckel angeformt ist.

Um eine zuverlässige Funktion der Aufdrehsicherung zu gewährleisten, ist es notwendig, dass eine Höhe des wenigstens einen Rastvorsprungs an eine Gewindesteigung des Deckels angepasst ist.

Um die Zuverlässigkeit der Aufdrehsicherung weiter zu erhöhen, sind wenigstens zwei, bevorzugt vier, Rastverbindungen vorgesehen. Durch eine Vervielfachung der Rastverbindungen wird eine Redundanz geschaffen, so dass gewährleistet ist, dass bei einem Defekt einer Rastverbindung trotzdem ein ungewolltes Aufdrehen des Deckels verhindert wird.

In einer bevorzugten Ausgestaltung sind das Gehäuse und der Deckel aus Kunststoff gefertigt. Bei einer Fertigung des Gehäuses und des Deckels aus Kunststoff ist es besonders einfach Rastausnehmungen und Rastvorsprünge an Deckel und Gehäuse vorzusehen. Kunststoff weist in der Regel auch eine gewisse Elastizität auf, so dass ein Einrasten der Rastvorsprünge dadurch begünstigt wird.

In einer bevorzugten Ausgestaltung ist die Stirnfläche des Deckels ringförmig ausgebildet.

Durch eine entsprechende Ausgestaltung eines Flankenwinkels der Rastvorsprünge wird außerdem erreicht, dass die Rastverbindung entweder ohne eine Beschädigung wieder lösbar ist oder dadurch, dass steile Flankenwinkel vorgesehen werden, die Rastvorsprünge beim Öffnen der Aufdrehsicherung abbrechen und so gewährleistet wird, dass ein Gehäuse bei einer unbefugten Öffnung nicht wieder, ohne Spuren zu hinterlassen, verschließbar ist.

Die Erfindung wird nachfolgend unter Bezugnahme auf die beigefügten Figuren eingehend erläutert.

Es zeigen:
- Figur 1: eine perspektivische Darstellung eines erfindungsgemäßen Gehäuses,
- Figur 2a: einen Schnitt durch eine lösbare Aufdrehsicherung in geschlossenem Zustand und
- Figur 2b: einen Schnitt durch eine Aufdrehsicherung, die beim Öffnen zerstört wird.

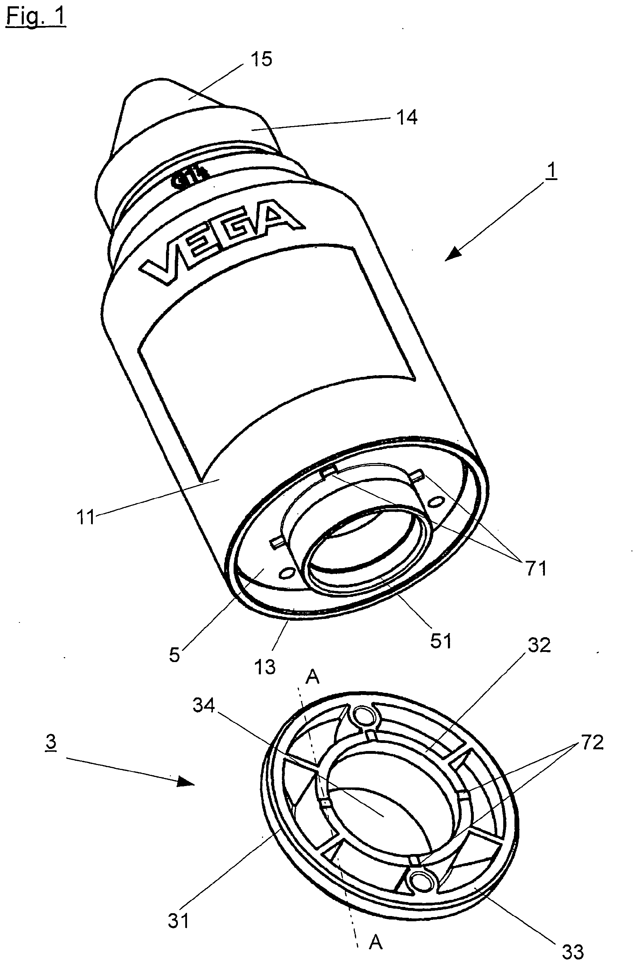

Figur 1 zeigt eine perspektivische Darstellung eines erfindungsgemäßen Gehäuses 1 mit einem Deckel 3, der mit dem Gehäuse 1 verschraubbar ist.

Das Gehäuse 1 weist einen im Wesentlichen zylinderförmig ausgebildeten Körper 11 auf, der einenends mit dem Deckel 3 verschraubbar ist. Andernends ist der Körper 11 konisch verjüngt ausgebildet, weist nach einem ersten Absatz ein Außengewinde 14 auf, an das anschließend ein Konus 15 angeformt ist, der in einer kreisförmigen Öffnung für eine Durchführung endet. Deckelseitig weist der Körper 11 ein Innengewinde 13 auf, das korrespondierend zu einem Außengewinde 31 des Deckels 3 ausgebildet ist. Im Inneren des Körpers 11 ist deckelseitig ein Anschlag 5 vorgesehen, der eine maximale Einschraubtiefe des Deckels 3 in den Körper 11 begrenzt. Der Anschlag 5 ist im vorliegenden Beispiel als ringförmige Fläche ausgebildet, die an ihrem inneren Umfang einen umlaufenden Kragen 51 aufweist, der sich in Richtung des Deckels 3 erstreckt. Der Deckel 3 weist korrespondierend zu dem umlaufenden Kragen 51 eine Durchführung 34 auf, in die der Kragen 51 beim Verschrauben des Deckels 3 mit dem Gehäuse 1 eintaucht. Am inneren Umfang des ringförmig ausgebildeten Anschlags 5 sind benachbart zu dem umlaufenden Kragen 51 vier nutförmige Rastausdehnungen 71 vorgesehen, die um jeweils 90° versetzt und radial ausgerichtet angeordnet sind. Der Deckel 3 ist mit einem Außengewinde 31 versehen und weist als Begrenzung der Durchführung 34 einen umlaufenden Steg 32 auf, an dem vier Rastvorsprünge 72 angeordnet sind. Die Rastvorsprünge 72 sind einstückig an den umlaufenden Steg 32 des Deckels 3 angeformt und korrespondierend zu den Rastausnehmungen 71 ausgerichtet.

Im Inneren des Gehäuses 1 kann bspw. eine Elektronik des Füllstandgeräts untergebracht sein. Durch die Durchführung in den Konus 15 kann eine Messleitung geführt sein. Durch Durchführung 34 im Deckel 3 können Anschlussleitungen geführt sein.

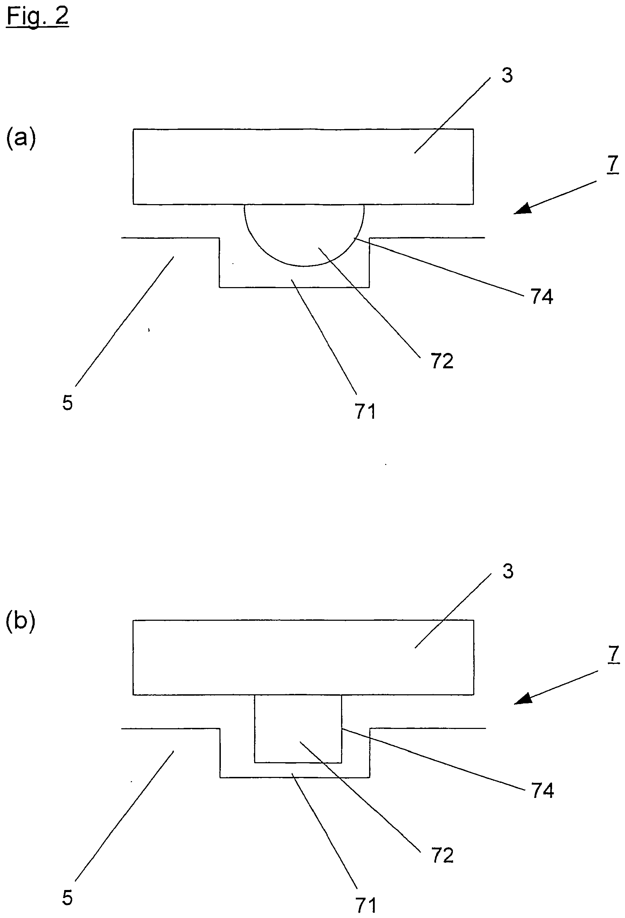

Figur 2a zeigt einen Schnitt durch eine Rastverbindung 7, die nach einem erstmaligen Schließen ohne Beschädigung der Rastverbindung 7 wieder geöffnet werden kann. Der Schnitt ist bezüglich des Deckels 3 entlang der Linie A-A, wie sie in Figur 1 eingezeichnet ist, geführt.

In den Anschlag 5 ist in dem vorliegenden Beispiel eine nutförmige Rastausnehmung 71 eingebracht, die einen im Wesentlichen Rechteckigen Querschnitt aufweist. Um ein beschädigungsfreies Öffnen und Schließen der Rastverbindung 7 zu gewährleisten ist an dem Deckel 3 ein im Querschnitt halbkreisförmiger Rastvorsprung 72 vorgesehen. Der Rastvorsprung 72 und die Rastausnehmung 71 weisen beide eine radiale Erstreckung auf, die in der vorliegenden Darstellung jedoch nicht ersichtlich ist. Der Rastvorsprung 72 weist in Aufdrehrichtung eine kreisbogenförmig verlaufende Flanke 74 auf, die bei einer Aufdrehbewegung an der in Aufdrehrichtung liegenden Kante der Rastausnehmung 71 anläuft und aufgrund der Elastizität des verwendeten Kunststoffs sowie aufgrund der Gewindesteigung über diese Kante hinweggleitet und die Rastverbindung 7 wieder frei gibt. Ein halbkreisförmiger Querschnitt wie im vorliegenden Beispiel ist lediglich beispielhaft für einen Querschnitt des Rastvorsprungs 74 mit flachen bzw. langsam ansteigenden Flanken.

In Figur 2 b ist der gleiche Schnitt wie in Figur 2a dargestellt, wobei der Rastvorsprung 72 im vorliegenden Beispiel derart ausgestaltet ist, dass nach einem erstmaligen Einrasten der Rastverbindung 7 ein Öffnen nur zur Zerstörung der Rastverbindung 7, d. h. im konkreten Fall durch ein Abbrechen des Rastvorsprungs 72 möglich ist. Der Rastvorsprung 72 ist dafür mit einer in Aufdrehrichtung steil verlaufenden Flanke 74 ausgebildet. Bei einem Aufdrehen der Verschraubung läuft die Flanke 74 an der Kante der Rastausnehmung 71 an und gleitet im Gegensatz zu der in Figur 2a dargestellten Ausführungsvariante nicht über diese Kante hinweg, sondern verkeilt sich und gibt die Rastverbindung 7 nicht frei. Wird der Deckel 3 dennoch mit erhöhtem Kraftaufwand weitergedreht, so bricht schlussendlich der Rastvorsprung 72 ab und macht die Rastverbindung 7 damit unbrauchbar.

Auf eine derartige Rastverbindung stellt der dargestellte Querschnitt nur eine beispielhafte Ausgestaltungsmöglichkeit dar und kann durch vielerlei Querschnitte durch steil verlaufenden Flanken ersetzt werden.

### Bezugszeichenliste

- 1: Gehäuse
- 3: Deckel
- 5: Anschlag
- 7: Rastverbindung

- 11: Körper
- 13: Innengewinde
- 14: Außengewinde
- 15: Konus

- 31: Außengewinde
- 32: Stirnfläche
- 34: Durchführung

- 51: Kragen
- 52: Durchführung

- 71: Rastausnehmung
- 72: Rastvorsprung
- 74: Flanke

## Patentansprüche

1. Gehäuse (1) für ein Füllstandmessgerät mit einem Deckel (3), wobei das Gehäuse (1) und der Deckel (3) miteinander verschraubbar sind, in Einschraubrichtung ein Anschlag (5) für den Deckel (3) vorgesehen ist, und eine Aufdrehsicherung zwischen dem Gehäuse (1) und dem Deckel (3) vorgesehen ist, **dadurch gekennzeichnet, dass** die Aufdrehsicherung als wenigstens eine Rastverbindung (7) ausgebildet ist, wobei der Deckel (3) nach einem Einrasten der Rastverbindung (7) ohne Beschädigung der Rastverbindung (7) wieder aufschraubbar ist, oder nur unter wenigstens teilweiser Zerstörung der Rastverbindung (7) wieder aufschraubbar ist.

2. Gehäuse (1) nach Anspruch 1,
**dadurch gekennzeichnet, dass**
dass die wenigstens eine Rastverbindung (7) aus wenigstens einer Rastausnehmung (71) und wenigstens einem Rastvorsprung (72) gebildet ist.

3. Gehäuse (1) nach Anspruch 2,
**dadurch gekennzeichnet, dass**
ein Teil der wenigstens einen Rastverbindung (7) an einer Stirnfläche (32) des Deckels (3) angeordnet ist.

4. Gehäuse (1) nach Anspruch 3,
**dadurch gekennzeichnet, dass**
die wenigstens eine Rastausnehmung (71) an dem Anschlag (5) und der wenigstens eine Rastvorsprung (72) an der Stirnfläche (32) des Deckels (3) angeordnet ist.

5. Gehäuse (1) nach Anspruch 4,
**dadurch gekennzeichnet, dass**
der wenigstens eine Rastvorsprung (72) einstückig an den Deckel (3) angeformt ist.

6. Gehäuse (1) nach einem der Ansprüche 2 bis 5,
**dadurch gekennzeichnet, dass**
eine Höhe des wenigstens einen Rastvorsprunges (72) an eine Gewindesteigung des Deckels (3) angepasst ist.

7. Gehäuse (1) nach einem der vorhergehenden Ansprüche,
**dadurch gekennzeichnet, dass**
wenigstens zwei, bevorzugt vier, Rastverbindungen (7) vorgesehen sind.

8. Gehäuse (1) nach einem der vorhergehenden Ansprüche,
**dadurch gekennzeichnet, dass**
das Gehäuse (1) und der Deckel (3) aus Kunststoff gefertigt sind.

9. Gehäuse (1) nach einem der Ansprüche 3 bis 8,
**dadurch gekennzeichnet, dass**
die Stirnfläche (32) ringförmig ausgebildet ist.

## Claims

1. A casing (1) for a filling level measuring device with a cap (3), wherein the casing (1) and the cap (3) can be screwed together, a stop (5) for the cap (3) is provided in the screw-in direction, and a untwisting prevention means is provided between the casing (1) and the cap (3), **characterized in that** t
he untwisting prevention means is configured as at least one latching connection (7), wherein the cap (3), after the latching connection (7) has engaged, can be screwed on again without any damage to the latching connection (7), or can be screwed on again with the latching connection (7) being destroyed only at least partially.

2. The casing (1) according to claim 1,
**characterized in that**
the at least one latching connection (7) is formed from at least one latching recess (71) and at least one latching projection (72).

3. The casing (1) according to claim 2,
**characterized in that**
a part of the at least one latching connection (7) is disposed on an end face (32) of the cap (3).

4. The casing (1) according to claim 3,
**characterized in that**
the at least one latching recess (71) is disposed on the stop (5), and the at least one latching projection (72) on the end face (32) of the cap (3).

5. The casing (1) according to claim 4,
**characterized in that**
the at least one latching projection (72) is integrally molded on to the cap (3).

6. The casing (1) according to any one of the claims 2 to 5,
**characterized in that**
a height of the at least one latching projection (72) is adapted to a thread pitch of the cap (3).

7. The casing (1) according to any one of the preceding claims,
**characterized in that**
at least two, preferably four, latching connections (7) are provided.

8. The casing (1) according to any one of the preceding claims,
**characterized in that**
the casing (1) and the cap (3) are made from plastic.

9. The casing (1) according to any one of the claims 3 to 8,
**characterized in that**
the end face (32) is configured in an annular manner.

## Revendications

1. Boîtier (1) pour un appareil de mesure de niveau de remplissage comprenant un couvercle (3), dans lequel le boîtier (1) et le couvercle (3) peuvent être vissés l'un à l'autre, une butée (5) pour le couvercle (3) est prévue dans le sens de vissage, et un dispositif à empêcher le dévissage est prévu entre le boîtier (1) et le couvercle (3), **caractérisé par le fait que** le dispositif à empêcher le dévissage est conçu comme au moins une liaison à encliquetage (7), dans lequel, après un encliquetage de la liaison à encliquetage (7), le couvercle (3) peut être à nouveau dévissé sans endommager ladite liaison à encliquetage (7) ou ne peut être à nouveau dévissé qu'en détruisant au moins en partie ladite liaison à encliquetage (7).

2. Boîtier (1) selon la revendication 1, **caractérisé par le fait que** ladite au moins une liaison à encliquetage (7) est formée d'au moins un évidement d'arrêt (71) et d'au moins une saillie d'arrêt (72).

3. Boîtier (1) selon la revendication 2, **caractérisé par le fait qu'**une partie de ladite au moins une liaison à encliquetage (7) est disposée sur une face frontale (32) du couvercle (3).

4. Boîtier (1) selon la revendication 3, **caractérisé par le fait que** ledit moins un évidement d'arrêt (71) est disposé sur la butée (5) et ladite au moins une saillie d'arrêt (72) est disposée sur la face frontale (32) du couvercle (3).

5. Boîtier (1) selon la revendication 4, **caractérisé par le fait que** ladite au moins une saillie d'arrêt (72) est formée d'un seul tenant sur le couvercle (3).

6. Boîtier (1) selon l'une quelconque des revendications 2 à 5, **caractérisé par le fait qu'**une hauteur de ladite au moins une saillie d'arrêt (72) est adaptée à un pas de filetage du couvercle (3).

7. Boîtier (1) selon l'une quelconque des revendications précédentes, **caractérisé par le fait qu'**au moins deux, de préférence quatre, liaisons à encliquetage (7) sont prévues.

8. Boîtier (1) selon l'une quelconque des revendications précédentes, **caractérisé par le fait que** le boîtier (1) et le couvercle (3) sont réalisés à partir de matière plastique.

9. Boîtier (1) selon l'une quelconque des revendications 3 à 8, **caractérisé par le fait que** la face frontale (32) est réalisée en anneau.
